# EUROPEAN PATENT SPECIFICATION

(11) **EP 1 662 910 B1**
(45) Date of publication and mention of the grant of the patent: **06.05.2009**
(21) Application number: 04748554.5
(22) Date of filing: 16.07.2004
(51) Int. Cl.: A23L 2/02, A23L 2/42, A23B 7/04, A23L 3/36, A23L 3/015

(54) **METHOD FOR MANUFACTURE AND STORAGE OF FRUIT AND/OR BERRY PRODUCTS**
VERFAHREN ZUR HERSTELLUNG UND LAGERUNG VON FRUCHT UND/ODER BEERENPRODUKTEN
PROCEDE DE FABRICATION ET DE STOCKAGE DES PRODUITS A BASE DE FRUITS ET/OU DE BAIES

(30) Priority: 17.09.2003 LV 030103; 20.04.2004 LV 040046
(43) Date of publication of application: 07.06.2006
(73) Proprietor: Kravecs, Eduards, 1021 Riga (LV)
(72) Inventor: Kravecs, Eduards, 1021 Riga (LV)
(74) Representative: Anohins, Vladimirs
(86) International application number: PCT/LV2004/000006
(87) International publication number: WO 2005/025338

(56) References cited:
- EP-A- 0 485 193
- EP-A- 0 894 440
- WO-A-02/28195
- WO-A-97/34504
- WO-A-99/38394
- US-A- 2 482 202
- PATENT ABSTRACTS OF JAPAN vol. 0061, no. 86 (C-126), 22 September 1982 (1982-09-22) & JP 57 099156 A (KUBOYA YOKO), 19 June 1982 (1982-06-19)

## Description

The present invention relates to the food processing industry, namely, to methods of manufacture and storage of fruit and/or berry products containing honey.

At the present time, natural products made exclusively of natural ingredients and subjected to a minimum, if any, processing, for example, freshly squeezed juices, play an increasingly important role. However, such freshly squeezed juices are easily liable to spoilage because of fermentation, mould formation, and mould development, which results in the very short shelf life of such products.

There is widely known in the art the method of pasteurisation (see, for *example, A potential Health Risk, Unpasteurized Fruit Juices. In:* Health Files from Ministry of Health and Ministry responsible for Seniors, British Columbia, Number 72, March 2000), which provides for a high-temperature processing of a juice at 82 °C during 15 seconds. This method kills the micro - organisms in the product almost completely and provides a significant increase in its shelf life, However, the major drawback of this method is the fact that the high-temperature processing exerts a detrimental effect on the organoleptic characteristics of the juice, namely, it causes a change of colour (because the high temperature destroys certain pigments) and a change of taste and flavour of the juice. Also, there is a risk of fractionation of the juice. All the above-mentioned consequences of the juice heat processing compel juice manufacturers to use different, often artificial stabilizing, colouring, and flavouring additives.

Also, a method of manufacture of natural carrot juice with the use of honey is known in the art (see WO 02/063979). This method includes squeezing carrot juice and mixing thereof with a small quantity of honey, the latter being used for sweetening. This product consists entirely of natural ingredients.

However, this method for manufacturing juice provides for neither pasteurization of the product, nor any other processing operation for reducing the level of bacteriological environment. Consequently, the resulting juice has a short shelf life.

Furthermore, a method of storing food products, in particular, berries or their juices using freezing thereof (see FOOD AND VEGETABLE PROCESSING, FAO AGRICILTURAL SERVICES BULLETIN No. 119, Food and Agriculture Organization of the United Nations, Rome, 1995) is known in the art. This method provides for deep freezing (at temperatures in the range between -20 °C and -30 °C) of juices. Major drawbacks of this method are that, provided an ordinary freezing of a juice, it is impossible to store the juice in glassware, as the juice increases its volume when frozen. Also, it is not convenient to consume frozen juice, due to the fact that frozen juice is solid, whereas if juice is defrosted mould spores become active. After several cycles of freezing and defrosting, temperature oscillations may cause browning of the product and so-called gelling effect. Moreover, the defrosting process of a juice takes a long time, and bacteria present in the air come to the surface of the juice, and, at an ambient temperature, fermentation begins after a short time, which results in the deterioration of the organoleptic characteristics of the juice.

Also the method of manufacturing papaya juice by the US Patent No. 4,089,985 is known. The aims of the invention by the US Patent No. 4,089,985 are to remove a characteristic fruit smell and to increase the shelf life of products manufactured on the base of papaya juice. This method includes the step of processing the papaya meat in a blender with honey added in proportion of 4 tablespoons of honey per 12 ounces liquid measure of papaya meat (honey concentration is about 18%). The mixture is processed in a blender at a temperature about 91 °C during at least 13 minutes in order to obtain a mixture both pasteurised and homogenized. The resulting product can be stored in cooled or frozen state.

The main drawback of this method is that it requires long period of time for the high-temperature processing of the mixture, which results in deterioration of the quality of the juice, because the organoleptic characteristics of both juice and honey deteriorate if they are processed with high temperature over a long period of time. As a whole, this method leads to the deterioration of both organoleptic characteristics and the biological value of the final product.

As the closest prior art for the present invention the method of freezing comestibles with compatible solutions (US patent No 2,482,202) has been chosen. This method undermines freezing of fruits, edible seeds, kernels, natural juices, etc. The object is generally speaking, to furnish an improved procedure of freezing products, to the end that the frozen articles immediately after the freezing thereof will be more nearly like the products of the nature in their optimum stages of ripeness and freshness, and will retain to the fullest possible measure the natural characteristics of the raw product.

This method is generally comprised of the operation of freezing food articles while supported in free space by causing a refrigerant solution to flow over them at a temperature low enough to cause quick freezing to take place, at a rate such that the refrigerant contacting the surface of the articles is quickly disloged and replaced by oncoming refrigerant, using as refrigerant an aqueous solution of soluble matter which is compatible with the flavors and other qualities of the foodstuff being frozen.

The closest prior art suggests the usage of aqueous solution as a refrigerant mean to freeze comestibles and in order to lower the freezing point of the refrigerant, it is undermined to use aqueous solutions of sugar, but not limited only to the sugar alone. Honey is mentioned as an example.

The aim of the present invention is the conservation of the biological value of the final product obtained on the basis of only natural ingredients and the provision of a product with a long shelf life and stable organoleptic characteristics.

According to the present invention, in a known method of manufacture and storage of a fruit and/or berry product including the steps of: obtaining fruit and/or berry juice; mixing the juice with honey; and storing the mixture in a refrigerated state, the inventors claim that the mixture of the said juice and said honey shall be prepared in the following proportions: 55 to 75 percent by volume of the juice and 25 to 45 percent by volume of the honey, and the resulting fruit or berry product shall be stored at a temperature below -10 °C.

When the honey is used in the mixture in a concentration in the range between 25 and 45 percent by volume, the final product has good organoleptic characteristics, the predominant taste and flavour of fruits and/or berries used, and a long, at least 12 - months, shelf life, and at the same time the biological value and organoleptic characteristics of the stored product are stably high. The final product has a semisolid consistency even at low temperatures, therefore, it is convenient to use in a chilled state and there is no need to augment its temperature before using.

As was shown experimentally, when the honey is used in the mixture with a fruit and/or berry juice in a concentration lower than 25 percent by volume, the freezing point of the final product is not sufficiently low, consequently, at the temperatures necessary for providing a long shelf life, the product becomes solid and partially crystallized. In such cases, it would be necessary to defrost the product before serving. Such a temperature increase, especially multiple, results in the shortening of the shelf life of the product.

When the honey used in the mixture with a fruit and/or berry juice in a concentration higher than 45 percent by volume, the taste and flavour of honey become predominant in the final product, and it loses the taste and flavour of the fruits and/or berries used.

It was found out experimentally that, if the product is stored at a temperature higher than -10 °C, then the shelf life of the product becomes significantly shorter.

All the previously known in the art methods for manufacture and storage of a fruit and/or berry product provide manufacturing from a fruit and/or berry juice either a natural product with a short shelf life, or a product with a prolonged shelf life, but containing artificial additives and/or obtained using intensive processing, which leads to the deterioration of the biological value. In the present invention a new method for manufacturing a product from a fruit and/or berry juice is claimed, with the addition of honey, the method providing a mostly prolonged shelf life without an intensive processing of the juice.

The present invention can be used in manufacturing a fruit and/or berry product using juices of different fruits, for example, apples, pears, japonicas (*Chaenomeles lagenaria*), oranges, tangerines etc. The method in accordance with this invention is especially advantageous in the manufacture of a fruit and/or berry product from berries characteristic for those regions where the climate allows them to be picked as often as once a year, such berries as blueberry, great blueberry, cranberry, blackcurrant, redcurrant, raspberry, wild strawberry, strawberry, etc can be used. It should be noted that most of the above-mentioned berries have unique properties and are rich in bioactive substances. That is why it is so crucial that the product has a long shelf life.

Below several examples of the embodiment of the present invention are described, which do not restrict the scope of the invention, but are merely illustrative.

### EXAMPLE 1

To manufacture a fruit and/or berry product in accordance with this invention, blueberry was taken as a raw material. The blueberry was put through a vertical press to obtain juice. 75 l (litres) of the blueberry juice obtained was mixed with 25 I of honey (the proportion of ingredients being 75 percent by volume of juice to 25 percent by volume of honey). The final product can be stored in a freezing chamber at the temperature -20 °C during a period of time up to one year.

The fruit and/or berry product in accordance with this invention can be diluted with water (to obtain a beverage), or it can be added to tea, spread on bread, used for preparing pops, cocktails (with or without alcohol), with the addition, if necessary, of any sweetener, including honey.

### EXAMPLE 2

To manufacture a fruit and/or berry product in accordance with this invention, blueberry was taken as a raw material. The blueberry was put through a vertical press to obtain juice. The blueberry juice obtained was filtered and subjected to a high-pressure processing at the pressure 150 MPa during 20 minutes at the temperature 20 °C. 75 I of the processed blueberry juice was mixed with 25 I of honey (the proportion of ingredients being 75 percent by volume of juice to 25 percent by volume of honey) at an ambient temperature. The mixture (final product) can be stored in a freezing chamber at the temperature -20 °C during a period of time up to one year.

The fruit and/or berry product in accordance with this invention can be diluted with water (to obtain a beverage), or it can be added to tea, spread on bread, used for preparing pops, cocktails (with or without alcohol), with the addition, if necessary, of any sweetener, including honey.

### EXAMPLE 3

To manufacture a fruit and/or berry product in accordance with this invention, blueberry was taken as a raw material. The blueberry was put through a mixer, and the obtained blueberry juice and pulp were subjected to high-pressure processing at the pressure 150 MPa during 12 minutes at the temperature 20 °C. Then 65 I of the processed juice-and-pulp mass was mixed with 35 I of honey (the proportion of ingredients being 65 percent by volume of juice-and-pulp mass to 35 percent by volume of honey). The mixture (final product) can be stored in a freezing chamber at the temperature -20 °C during a period of time up to one year. This berry product is sweeter and has less liquidity than the fruit and/or berry product as in Example 1 above.

### EXAMPLE 4

To manufacture a fruit and/or berry product in accordance with this invention, raspberry was taken as a raw material. To obtain juice, the raspberry was put through a juice extractor. The obtained raspberry juice was subjected to a high-pressure processing at the pressure 220 MPa during 17 minutes at the temperature 22 °C. 75 I of the processed raspberry juice was mixed with 25 1 of honey (the proportion of ingredients being 75 percent by volume of juice to 25 percent by volume of honey). The final product can be stored at the temperature -20 °C during 12 months.

### EXAMPLE 5

To manufacture a fruit and/or berry product in accordance with this invention, wild strawberry was taken as a raw material. The wild strawberry was put through a vertical press to obtain juice. The obtained wild-strawberry juice was subjected to a high-pressure processing at the pressure 240 MPa during 10 minutes at the temperature 20 °C. 40 I of honey was mixed with 60 I of the processed wild-strawberry juice (the proportion of ingredients being 60 percent by volume of juice to 40 percent by volume of honey). The final product can be stored at the temperature -18 °C during one year.

### EXAMPLE 6

To manufacture a fruit and/or berry product in accordance with this invention, oranges were taken as a raw material. The oranges were washed in a hot water, peeled and put through a press to obtain juice. 55 I of the obtained orange juice was mixed with 45 l of honey (the proportion of ingredients being 55 percent by volume of juice to 45 percent by volume of honey). The final product can be stored at the temperature -22 °C during 10 months. The product has a high biological value and keeps the colour and flavour of the oranges.

### EXAMPLE 7

To manufacture a fruit and/or berry product in accordance with this invention, red bilberry was taken as a raw material. The red bilberry was put through a press, and the mass was filtered to obtain juice. 55 I of the obtained red-bilberry juice was mixed with 45 I of honey (the proportion of ingredients being 55 percent by volume of juice to 45 percent by volume of honey). The mixture (final product) can be stored in a freezing chamber at the temperature -23 °C during 14 months.

### EXAMPLE 8

To manufacture a fruit and/or berry product in accordance with this invention, strawberry was taken as a raw material. The strawberry was put through a juice extractor to obtain juice. 60 1 of the obtained strawberry juice was mixed with 40 I of honey (the proportion of ingredients being 60 percent by volume of juice to 40 percent by volume of honey). The mixture (final product) can be stored at the temperature -22 °C during 12 months.

## Claims

1. A method for manufacture and storage of a fruit and/or berry product including the steps of mixing a fruit and/or berry juice with honey and storing in a refrigerated state, **characterized in that** said juice and said honey are used in the following proportions: from 55 to 75 percent by volume of juice and from 25 to 45 percent by volume of honey; and the resulting fruit and/or berry product is stored at a temperature below -10 °C.

## Patentansprüche

1. Verfahren zur Herstellung und Lagerung von Frucht und/oder Beerenprodukten, umfassendes die Schritten der Mischung von Frucht und/oder Beerensaft mit Honig und der Aufbewahrung im gekühlten Zustand, **dadurch gekennzeichnet, dass** SaftundHonigim Verhälntis: Saft ab 55 bis 75 Volumenprozent und Honig ab 25 bis 45 Volumenprozent gemischt werden und das erhaltene Frucht und/oder Beerenprodukt bei Temperatur unter - 10°C gelagert wird.

## Revendications

1. Procédé de fabrication et de stockage des produits à base de fruit et/ou de baies comprenant les phases de mélangeage de jus de fruits et/ou de baies avec le miel et de stockage en l'état congelé, **caractérisé en ce que** le jus et le miel susmentionnés sont utilisés en proportions suivantes : de 55 à 75 pour-cent en volume du jus et de 25 à 45 pour-cent en volume du miel; et le produit de fruit et/ou de baies obtenu est stocké à la température inférieure à -10°C.
